# EUROPÄISCHE PATENTSCHRIFT

(11) **EP 0 485 860 B1**
(45) Veröffentlichungstag und Bekanntmachung des Hinweises auf die Patenterteilung: **22.06.1994**
(21) Anmeldenummer: 91118815.9
(22) Anmeldetag: 05.11.1991
(51) Int. Cl.: B29C 47/34, B29C 47/90

(54) **Vorrichtung zur Herstellung eines Profilkörpers**
Apparatus for manufacturing a profiled member
Dispositif pour la fabrication d'un profilé

(30) Priorität: 16.11.1990 DE 4036577
(43) Veröffentlichungstag der Anmeldung: 20.05.1992
(73) Patentinhaber: FRIEDRICH THEYSOHN GmbH, D-30853 Langenhagen (DE)
(72) Erfinder: Reisinger, Ludwig, McPherson, Kansas 67460 (US); Gröblacher, Hans, McPherson, Kansas 67460 (US)
(74) Vertreter: Döring, Roger, Dipl.-Ing.

(56) Entgegenhaltungen:
- EP-A- 0 237 723
- EP-A- 0 452 814
- FR-A- 2 359 696
- FR-E- 64 619
- US-A- 2 747 224
- US-A- 3 583 620
- US-A- 4 100 239
- PATENT ABSTRACTS OF JAPAN vol. 8, no. 220 (M-330)(1657) 6. Oktober 1984 & JP-A-59 103 735 ( UBE KOSAN K.K. ) 15. Juni 1984

## Beschreibung

Die Erfindung bezieht sich auf eine Vorrichtung zur Herstellung eines langgestreckten Profilkörpers, bestehend aus einer Plastifiziervorrichtung zur kontinuierlichen Erzeugung des Profilkörpers, aus einer den Profilkörper kontinuierlich abziehenden Abzugsvorrichtung und aus einem zwischen Plastifiziervorrichtung und Abzugsvorrichtung angeordneten Kalibriertisch mit einem Aufspannrahmen, der gegenüber dem Kalibriertisch in der Höhe verstellbar ist, bei welcher auf dem Aufspannrahmen mindestens eine Kalibrierung und mindestens eine Kühleinrichtung angebracht sind (Firmenprospekt "Extrusionsfolgemaschinen" der DE-Firma "IDE-Werkzeug- und Maschinenbau", Ostfildern, aus 1986).

Derartige Vorrichtungen sind auf dem Markt erhältlich und beispielsweise aus dem angegebenen Firmenprospekt ersichtlich. Sie werden beispielsweise zur Herstellung von Fensterprofilen eingesetzt, bei denen es sich um Hohlprofile handelt. Das aus der Plastifiziervorrichtung - im folgenden kurz "Extruder" genannt - austretende noch weiche Material muß insbesondere bei Hohlprofilen solange kalibriert werden, bis es durch Abkühlung ausreichend formstabil ist. Dazu ist der Kalibriertisch vorgesehen, in dessen Kalibrierungen der Profilkörper durch Unterdruck so gehalten wird, daß er nicht in sich zusammenfallen kann. Im Bereich des Kalibriertisches wird der Profilkörper kalibriert und beispielsweise durch Wasser gekühlt.

Aus der EP-A-0 237 723 geht ein Verfahren zur Herstellung geschäumter Extrudate hervor, bei welchem das Extrudat mittels einer Abzugsvorrichtung zunächst durch Kalibrierkammern, die auf einem Kalibriertisch angebracht sind, und anschließend durch ein Kühlbad gezogen wird. Um Auswirkungen von Schwankungen im Extrusions- und Verschäumungsverhalten des eingesetzten Kunststoffs auf die Abmessungen des Extrudats ausgleichen zu können, wird dessen Abzugskraft gemessen. Das Meßergebnis wird zu einer Veränderung der Abzugsgeschwindigkeit des Extrudats verwendet. Ein ähnliches Verfahren geht aus der JP-A-59 103735 hervor, mit welchem ein Strang aus thermoplastischem Kunststoff extrudiert werden soll. Hier wird die Abzugsgeschwindigkeit des Strangs über eine Kraftmessung geregelt.

Auf dem Aufspannrahmen des Kalibriertisches sind bei der bekannten Vorrichtung nach dem angegebenen Firmenprospekt eine Kalibrierung, die mit Unterdruck beaufschlagt werden kann, und eine Kühleinrichtung befestigt. Damit die Kalibrierung gegenüber dem Extruder justiert werden kann, ist der Aufspannrahmen im Kalibriertisch in der Höhe verstellbar angebracht. Dazu können beispielsweise verstellbare Vertikalführungen eingesetzt werden.

Beim Abzug des Profilkörpers durch die Abzugsvorrichtung werden auf die Kalibrierung und damit auf den Aufspannrahmen erhebliche Kräfte ausgeübt, die während des Abzugvorgangs auch schwanken können. Diese Kräfte werden bei bestehenden Anlagen über die Vertikalführungen übertragen. Es kann dadurch leicht zu Schwingungen des Aufspannrahmens kommen, die sich ungünstig auf die Qualität des Profilkörpers auswirken. Das gilt insbesondere für dessen Maßgenauigkeit und für die Beschaffenheit seiner Oberfläche. Oft sind unübersehbare Markierungen nicht zu vermeiden. Solche Teile des Profilkörpers sind Ausschuß.

Der Erfindung liegt die Aufgabe zugrunde, die eingangs geschilderte Vorrichtung derart weiterzubilden, daß Rückwirkungen der Abzugsvorrichtung auf die Qualität des Profilkörpers ausgeschlossen werden können.

Diese Aufgabe wird gemäß der Erfindung dadurch gelöst, daß zwischen dem Kalibriertisch und der Abzugsvorrichtung ein schubfester Abstandshalter angebracht ist, der auf der einen Seite am Aufspannrahmen und auf der anderen Seite an der Abzugsvorrichtung befestigt ist.

Bei dieser Vorrichtung ist zwischen der die Abzugskräfte erzeugenden Abzugsvorrichtung und dem Aufspannrahmen des Kalibriertisches eine schubfeste und damit starre Verbindung vorhanden. Die von der Abzugsvorrichtung über den Kalibrierer auf den Aufspannrahmen übertragenen Kräfte werden bei dieser Vorrichtung durch den Abstandshalter aufgefangen. Sie werden nicht mehr auf die für die Verstellung des Aufspannrahmens vorhandenen Vertikalführungen übertragen. Der auf diese Weise nahezu starr mit der Abzugsvorrichtung verbundene Aufspannrahmen kann nicht mehr in Schwingungen geraten, sondern er behält seine mit dem Justiervorgang eingestellte Position bei. Die Profilkörper werden mit gleichbleibender Qualität und einwandfreier Oberfläche hergestellt.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:
Fig. 1 eine Draufsicht auf eine Vorrichtung nach der Erfindung in schematischer Darstellung.
Fig. 2 einen Querschnitt durch einen mit der Vorrichtung herstellbaren Profilkörper.
Fig. 3 eine Seitenansicht der Vorrichtung nach Fig. 1
Fig. 4 eine Einzelheit der Vorrichtung in vergrößerter Darstellung.

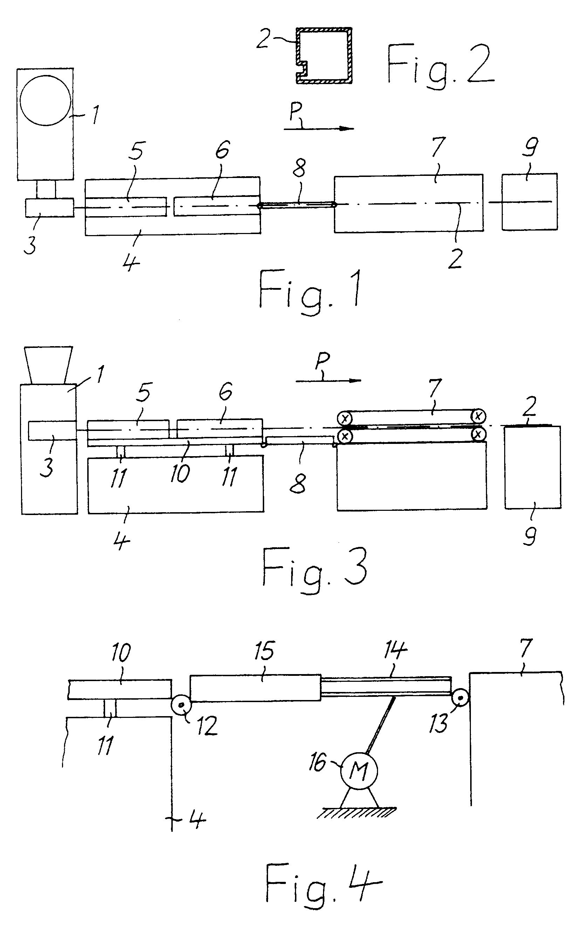

Von einem Extruder 1 wird ein beispielsweise aus thermoplastischem Kunststoff bestehender, aus Fig. 2 im Querschnitt ersichtlicher Profilkörper 2 erzeugt. Es ist ein beispielsweise für Fensterrahmen verwendbarer hohler Profilkörper 2 dargestellt. Der Profilkörper 2 kann jede beliebige Querschnittsform haben. Er kann prinzipiell auch massiv ausgeführt sein.

Der aus dem Spritzkopf 3 des Extruders 1 austretende, in den Fig. 1 und 3 durch eine strichpunktierte Linie angedeutete Profilkörper 2 wird unmittelbar einer auf einem Kalibriertisch 4 angebrachten Kalibrierung 5 zugeführt. Die Kalibrierung 5 hat eine Durchgangsöffnung, die dem Profil des Profilkörpers 2 angepaßt ist. Er wird während des Herstellungsprozesses mit Unterdruck beaufschlagt, so daß der Profilkörper 2 an die Innenwände der Kalibrierung 5 gesogen wird und nicht zusammenfallen kann. In der durch den Pfeil P angedeuteten Abzugsrichtung gelangt der Profilkörper 2 hinter der Kalibrierung 5 in eine Kühleinrichtung 6, die ebenfalls auf dem Kalibriertisch 4 angebracht ist.

Der abgekühlte und damit stabile Profilkörper 2 wird von einer Abzugsvorrichtung 7 in Richtung des Pfeiles P kontinuierlich abgezogen. Zwischen Kalibriertisch 4 und Abzugsvorrichtung 7 ist ein schubfester Abstandshalter 8 angebracht. Die Abzugsvorrichtung 7 kann, wie in Fig. 3 dargestellt, beispielsweise als Raupenabzug ausgeführt sein. In der hinter der Abzugsvorrichtung 7 angedeuteten Bearbeitungsstation 9 kann der Profilkörper 2 abgelängt werden.

Kalibrierung 5 und Kühleinrichtung 6 sind auf einem Aufspannrahmen 10, der auch als Platte ausgeführt sein kann, befestigt, der zum Kalibriertisch 4 gehört. Zum Justieren der Kalibrierung 5 gegenüber dem Spritzkopf 3 des Extruders 1 ist der Aufspannrahmen 10 in seiner Höhe verstellbar. Er kann auch quer zu seiner Längsrichtung kippbar sein. Dazu können Vertikalführungen 11 verwendet werden, von denen in Fig. 3 zwei angedeutet sind.

Auf dem Aufspannrahmen 10 sind mindestens eine Kalibrierung 5 und mindestens eine beispielsweise von Kühlwasser durchströmte Kühleinrichtung 6 befestigt. Da die Durchgangsöffnung der Kalibrierung 5 sehr genau bearbeitet sein muß, ist es zweckmäßig, dieselbe in mehrere, in Abzugsrichtung des Profilkörpers 2 hintereinander angeordnete Elemente zu unterteilen. Die Länge des Kalibriertisches 4 und damit auch die Länge des Aufspannrahmens 10 kann beispielsweise vier bis acht Meter betragen. Auf dem Aufspannrahmen 10 können dann beispielsweise acht solche Elemente oder Kalibrierungen angebracht sein. Kalibrierung 5 und Kühleinrichtung 6 können auch miteinander kombiniert sein. Die Kalibrierung 5 kann dann also von Kühlwasser durchströmt oder umströmt werden.

Der Abstandshalter 8 ist bei der hier beschriebenen Vorrichtung zwischen der Abzugsvorrichtung 7 und dem Aufspannrahmen 10 des Kalibriertisches 10 angebracht. Er verläuft im wesentlichen horizontal, parallel zu dem Profilkörper 2. Um eine Verstellung des Aufspannrahmens 10 beim Justieren nicht zu behindern, ist der Abstandshalter 8, so wie in Fig. 4 angedeutet, am Aufspannrahmen 10 und an der Abzugsvorrichtung 7 über Gelenke 12 bzw. 13 befestigt.

Während des Herstellungsprozesses wird der Profilkörper 2 durch die Abzugsvorrichtung 7 in Richtung des Pfeiles P gezogen. Er wird dabei dauernd in der Kalibriemung 5 durch den aufgebrachten Unterdruck an dessen Innenwände gesogen, an denen er also mehr oder weniger fest haftet. Die dadurch bedingten Reibungskräfte müssen von der Abzugsvorrichtung 7 überwunden werden. Der Profilkörper 2 wird also mit erheblichen Kräften, die schwanken können, durch die Kalibrierung 5 bewegt. Die prozeßbedingte absolute Schwankung der Abzugskraft wirkt sich daher nur auf den Aufspannrahmen 10 aus, da derselbe über den Abstandshalter 8 schubfest und damit starr mit der Abzugsvorrichtung 7 verbunden ist. Die Vertikalführungen 11 oder jeder andere Verstellmechanismus für den Aufspannrahmen 10 werden durch Kräfte, die von der Abzugsvorrichtung 7 ausgehen, nicht belastet.

Der Abstandshalter 8 ist vorzugsweise in seiner axialen Länge verstellbar. Er ist dann beispielsweise als Gewindestange 14 ausgeführt, die an der Abzugsvorrichtung 7 angebracht und in ein Rohr 15 einschraubbar ist, das am Aufspannrahmen 10 befestigt ist oder umgekehrt. Die Verstellbarkeit des Abstandshalters 8 ist dann von Vorteil, wenn der Kalibriertisch 4 zwischen Extruder 1 und Abzugsvorrichtung 7 verschiebbar angeordnet ist. Das ist u. U. erforderlich, damit die Öffnung des Spritzkopfs 3 zum Reinigen oder aus anderen Gründen zugänglich wird. Da die Kalibrierung 5 in Arbeitsposition sehr dicht am Spritzkopf 3 angeordnet ist, muß sie für diese Zwecke also entfernt werden können.

Wenn der Abstandshalteer 8 als Gewindestange 14 mit zugehörigem Rohr 15 ausgebildet ist, kann er gleichzeitig zur Verschiebung des Kalibriertisches 4 verwendet werden. Dazu braucht nur die Gewindestange 14 im Rohr 15 gedreht zu werden. Das kann beispielsweise mittels eines elektrisch angetriebenen Motors 16 durchgeführt werden.

Zwischen Aufspannrahmen 10 und Abstandshalter 8 kann eine nicht dargestellte, an sich bekannte Kraftmeßdose angebracht sein, die an dieser Stelle die von der Abzugsvorrichtung 7 aufgebrachte Abzugskraft direkt und damit sehr genau erfaßt. Beim Über- oder Unterschreiten vorgegebener Grenzwerte für die Abzugskraft kann in den Herstellungsprozeß eingegriffen werden.

## Patentansprüche

1. Vorrichtung zur Herstellung eines langgestreckten Profilkörpers, bestehend aus einer Plastifiziervorrichtung zur kontinuierlichen Erzeugung des Profilkörpers, aus einer den Profilkörper kontinuierlich abziehenden Abzugsvorrichtung und aus einem zwischen Plastifiziervorrichtung und Abzugsvorrichtung angeordneten Kalibriertisch mit einem Aufspannrahmen, der gegenüber dem Kalibriertisch in der Höhe verstellbar ist, bei welcher auf dem Aufspannrahmen mindestens eine Kalibrierung und mindestens eine Kühleinrichtung angebracht sind, dadurch gekennzeichnet, daß zwischen dem Kalibriertisch (4) und der Abzugsvorrichtung (7) ein schubfester Abstandshalter (8) angebracht ist, der auf der einen Seite am Abspannrahmen (10) und auf der anderen Seite an der Abzugsvorrichtung (7) befestigt ist.

2. Vorrichtung nach Anspruch 1, dadurch gekennzeichnet, daß der Abstandshalter (8) am Abspannrahmen (10) und an der Abzugsvorrichtung (7) über Gelenke (12,13) angebracht ist.

3. Vorrichtung nach Anspruch 1 oder 2, dadurch gekennzeichnet, daß der Abstandshalter (8) in seiner axialen Länge verstellbar ist.

4. Vorrichtung nach einem der Ansprüche 1 bis 3, dadurch gekennzeichnet, daß der Abstandshalter (8) als in ein Rohr (15) einschraubbare Gewindestange (14) ausgebildet ist.

5. Vorrichtung nach einem der Ansprüche 1 bis 4, dadurch gekennzeichnet, daß Gewindestange (14) und Rohr (15) etwa waagerecht zwischen Abspannrahmen (10) und Abzugsvorrichtung (7) angeordnet sind.

6. Vorrichtung nach einem der Ansprüche 1 bis 5, dadurch gekennzeichnet, daß die Gewindestange (14) durch einen Motor (16) verstellbar ist.

7. Vorrichtung nach einem der Ansprüche 1 bis 6, dadurch gekennzeichnet, daß zwischen dem Abstandshalter (8) und dem Abspannrahmen (10) eine Kraftmeßdose angebracht ist.

## Claims

1. Apparatus for manufacturing an elongated sectional body (2), comprising a plasticizing device (1) for continuously producing the sectional body (2), a withdrawal device (7) which continuously withdraws the sectional body (2), and a sizing table (4) which is disposed between the plasticizing device (1) and the withdrawal device (7) and has a clamping frame (10) which is height-adjustable relative to the sizing table (4), wherein at least one sizing device (5) and at least one cooling device (6) are mounted on the clamping frame (10), characterized in that provided between the sizing table (4) and the withdrawal device (7) is a shear-resistant spacer (8) which is fastened at one end to the clamping frame (10) and at the other end to the withdrawal device (7).

2. Apparatus according to claim 1, characterized in that the spacer (8) is attached to the clamping frame (10) and to the withdrawal device (7) via joints (12, 13).

3. Apparatus according to claim 1 or 2, characterized in that the spacer (8) is adjustable in terms of its axial length.

4. Apparatus according to one of claims 1 to 3, characterized in that the spacer (8) takes the form of a threaded rod (14) which may be screwed into a tube (15).

5. Apparatus according to one of claims 1 to 4, characterized in that the threaded rod (14) and tube (15) are disposed substantially horizontally between the clamping frame (10) and the withdrawal device (7).

6. Apparatus according to one of claims 1 to 5, characterized in that the threaded rod (14) is adjustable by means of a motor (16).

7. Apparatus according to one of claims 1 to 6, characterized in that a load cell is provided between the spacer (8) and the clamping frame (10).

## Revendications

1. Dispositif pour la fabrication d'un corps profilé allongé (2) se composant d'un dispositif à plastifier (1) pour la production en continu du corps profilé (2), d'un dispositif d'éjection (7) éjectant en continu le corps profilé (2) et d'une table de calibrage (4) disposée entre le dispositif à plastifier (1) et le dispositif d'éjection (7) avec un cadre de serrage (10) qui est réglable en hauteur par rapport à la table de calibrage (4), dispositif avec lequel il est disposé sur le cadre de serrage (10) au moins un calibrage (5) et au moins un dispositif de refroidissement (6), caractérisé en ce qu'entre la table de calibrage (4) et le dispositif d'éjection (7) est disposé un écarteur (8), résistant au cisaillement, qui est fixé, d'un côté, au cadre de serrage (10) et, de l'autre côté, au dispositif d'éjection (7).

2. Dispositif selon la revendication 1, caractérisé en ce que l'écarteur (8) est mis en place sur le cadre de serrage (10) et sur le dispositif d'éjection (7) par l'intermédiaire d'articulations (12, 13).

3. Dispositif selon la revendication 1 ou 2, caractérisé en ce que l'écarteur (8) est réglable dans sa longueur axiale.

4. Dispositif selon l'une des revendications 1 à 3, caractérisé en ce que l'écarteur (8) est conçu comme une tige filetee (14) vissable dans un tube (15).

5. Dispositif selon l'une des revendications 1 à 4, caractérisé en ce que la tige filetée (14) et le tube (15) sont disposés, entre le cadre de serrage (10) et le dispositif d'éjection (7), sensiblement à l'horizontale.

6. Dispositif selon l'une des revendications 1 à 5, caractérisé en ce que la tige filetée (14) est réglable par un moteur (16).

7. Dispositif selon l'une des revendications 1 à 6, caractérisé en ce qu'entre l'écarteur (8) et le cadre de serrage (10) est disposée une boîte dynamométrique.
